# EUROPÄISCHE PATENTANMELDUNG

(11) **EP 0 703 033 A1**
(43) Veröffentlichungstag der Anmeldung: **27.03.1996**
(21) Anmeldenummer: 95110200.3
(22) Anmeldetag: 30.06.1995
(51) Int. Cl.: B23D 47/04, B23D 59/00

(54) **Druckbalken für Sägemaschinen**

(30) Priorität: 22.09.1994 DE 4433829
(71) Anmelder: HOLZMA-MASCHINENBAU GmbH, D-75365 Calw (DE)
(72) Erfinder: Jenkner, Erwin, D-71083 Herrenberg-Oberjesingen (DE); Heller, Heribert, D-72218 Wildberg (DE)
(74) Vertreter: Becker, Maria, Dipl.-Phys.

(57) **Zusammenfassung**

Bei einem als Hohlkonstruktion ausgebildeten Druckbalken (10) für Sägemaschinen ist der Absaugkanal (16) für Späne und Stäube parallel zu dem sich an der Balkenunterseite (20) in deren Längsrichtung erstreckenden Schnittspalt (22) in den Balkenkörper integriert, wobei der Schnittspalt (22) vom übrigen Balkenhohlraum getrennt ist.

Der Vorteil dieser Konstruktion besteht u. a. darin, daß eine den Druckbalken (10) längs durchsetzende Ausgleichswelle (14) nicht von Spänen und Stäuben beaufschlagt werden kann, was üblicherweise zwangsläufig zur Verschmutzung ihrer Lager führt.

## Beschreibung

Die Erfindung betrifft einen Druckbalken für Sägemaschinen mit den Merkmalen des Oberbegriffs von Anspruch 1.

Bei solchen Druckbalken kann der zur Abführung des Sägestaubes vorgesehene Absaugkanal in unterschiedlicher Weise vorgesehen sein. Üblich ist es, den Innenraum des hohlen Druckbalkens, in welchen der Schnittspalt einmündet, an eine Absaugeinrichtung anzuschließen, wozu üblicherweise an der Oberseite des Druckbalkens eine oder oder mehrere Anschlußöffnungen vorgesehen sind. In diesem Falle bildet somit der Balkeninnenraum zugleich den Absaugkanal. Dies ist insofern nachteilig, als längs des Druckbalkens durch diesen eine seinen Hohlraum durchsetzende, in den Balkenstirnwänden gelagerte Ausgleichswelle hindurchgeführt ist, die von den abzusaugenden Stäuben und Spänen beaufschlagt wird und es mit der Zeit zu einer Verschmutzung ihrer Lagerungen kommt.

Um diesen Nachteil zu vermeiden, ist es auch bekannt, auf den Druckbalken einen sich in dessen Längsrichtung erstreckenden Blechkanal aufzusetzen, was jedoch hohen technischen Aufwand erfordert.

Der Erfindung liegt die Aufgabe zugrunde, einen Druckbalken in einer dem Oberbegriff des Anspruchs 1 entsprechenden Ausbildung anzugeben, dessen Konstruktion eine vorteilhafte Druckbalkenherstellung ermöglicht sowie eine Reinhaltung der Ausgleichswellenlager gewährleistet.

Diese Aufgabe wird durch die kennzeichnenden Merkmale des Anspruches 1 gelöst.

Bei der erfindungsgemäßen Konstruktion ist damit der die Ausgleichswelle enthaltende Druckbalkenhohlraum vom Schnittspalt abgetrennt.

Zur Herstellung des Druckbalkens eignet sich vorteilhaft ein Aluminium-Ziehprofil, das bei seiner Herstellung zugleich mit der Kammer zur Aufnahme der Ausgleichswelle und mit dem Absaugkanal ausgestattet werden kann. Alternativ hierzu ist es auch möglich, eine Stahlkonstruktion aus Blech und/oder Rohrprofilen mit entsprechenden Querschnitten zur Druckbalkenherstellung zu verwenden, was jedoch mit größerem Fertigungsaufwand verbunden wäre.

In jedem Falle bilden Druckbalkenprofil und Absaugkanal bezüglich Querschnitt und Statik eine Einheit.

Weitere vorteilhafte Ausgestaltungen der Erfindung sind Gegenstand von Unteransprüchen.

In der Zeichnung ist ein Ausführungsbeispiel der Erfindung dargestellt. Es zeigen:
- Figur 1: eine Vorderansicht des Druckbalkens;
- Figur 2: einen Balkenquerschnitt entlang der Linie A-A der Figur 1;
- Figur 3: einen Balkenquerschnitt entlang der Linie B-B der Figur 1 und
- Figur 4: einen Balkenquerschnitt entlang der Linie C-C der Figur 1.

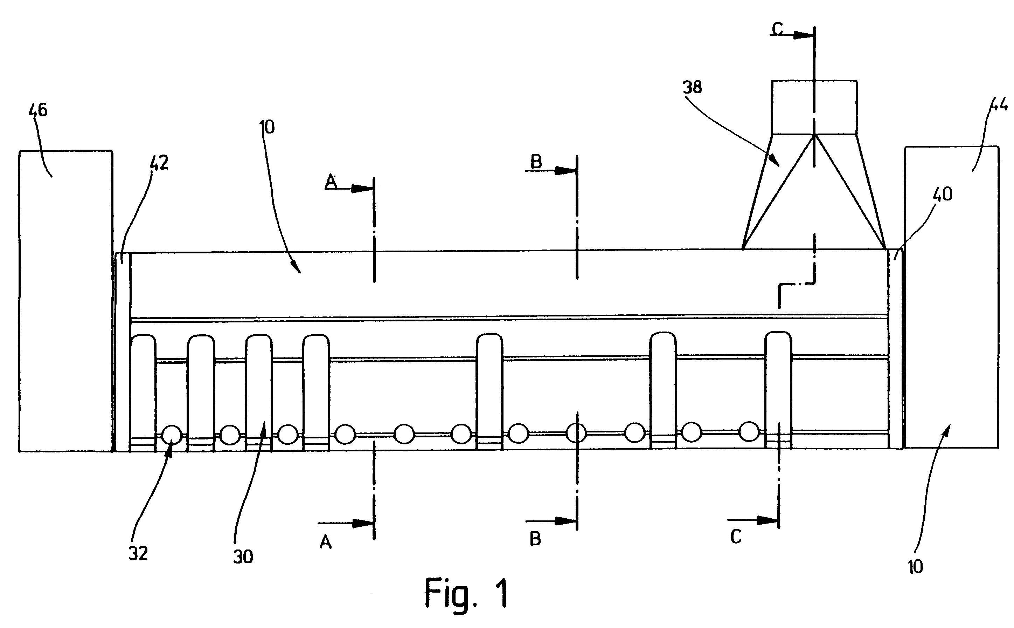

Der in Figur 1 als Ganzes mit 10 bezeichnete Druckbalken ist vorzugsweise aus einem gezogenen Aluminiumprofil gefertigt, in das bei seiner Herstellung bereits eine allseitig geschlossene Kammer 12 zum Hindurchführen einer Druckbalken-Ausgleichswelle 14, ein Absaugkanal 16 sowie diverse Hohlräume eingeformt worden sind, von denen der mit 18 bezeichnete einen erweiterten inneren Abschnitt eines nachträglich in die untere Druckbalkenseite 20 in Balkenlängsrichtung eingebrachten Schnittspalts 22 bildet.

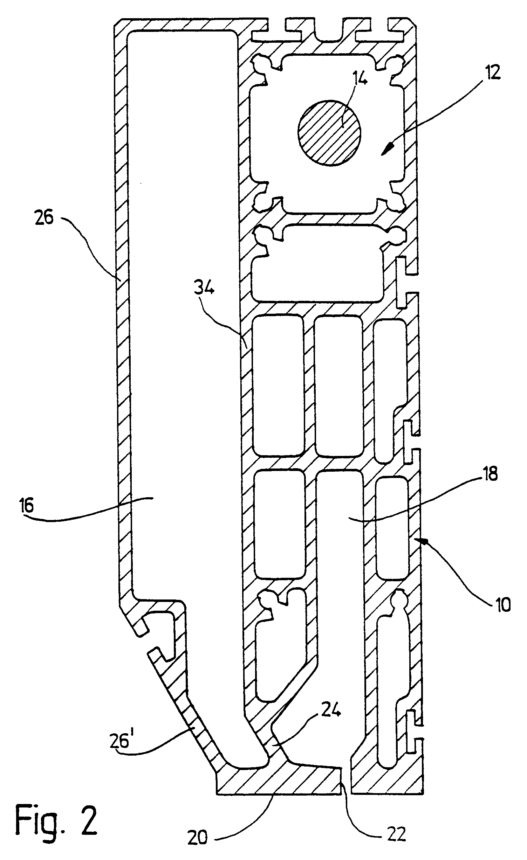

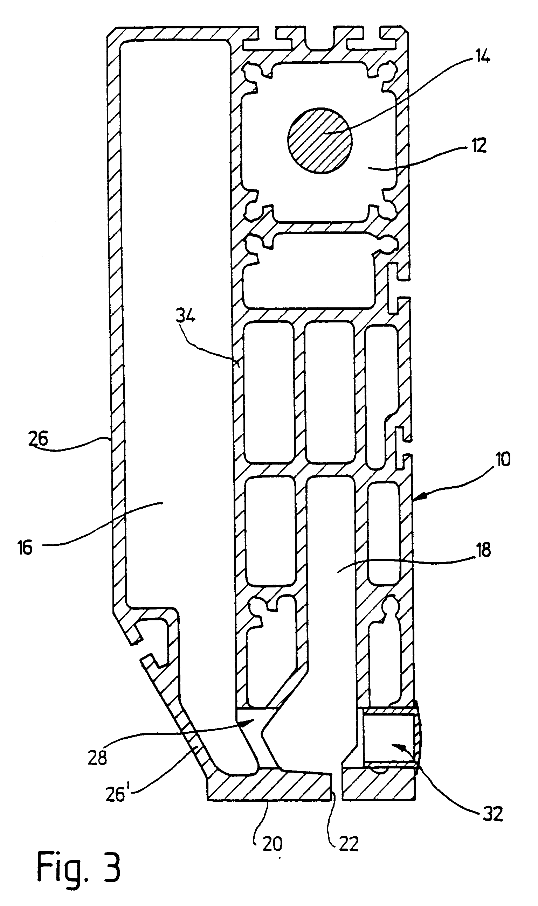

Der Absaugkanal 16 erstreckt sich in seitlichem Abstand parallel zum Schnittspalt 22 und ist, wie aus Figur 3 zu ersehen ist, im Übergangsbereich der Balkenspaltabschnitte 18, 22 mit dem Schnittspalt zur Absaugung von Spänen und Stäuben verbunden. Wie Figur 2 zeigt, erstreckt sich der im Querschnitt vorzugsweise rechteckförmige Absaugkanal 16 im wesentlichen über die Höhe des Druckbalkens und ist in seinem Verbindungsbereich mit dem Schnittspalt 22 in seitlicher Richtung auf diesen erweitert, wobei dieser Bereich vom erweiterten Spaltabschnitt 18 durch den Ziehvorgang des Aluminiumprofils bedingt durch eine Trennwand 24 abgetrennt ist. Die Trennwand 24 erstreckt sich von oben schräg nach unten und bildet mit einem äußeren unteren Wandabschnitt 26' der Außenwand 26 des Absaugkanals eine düsenartige Verengung des letzteren.

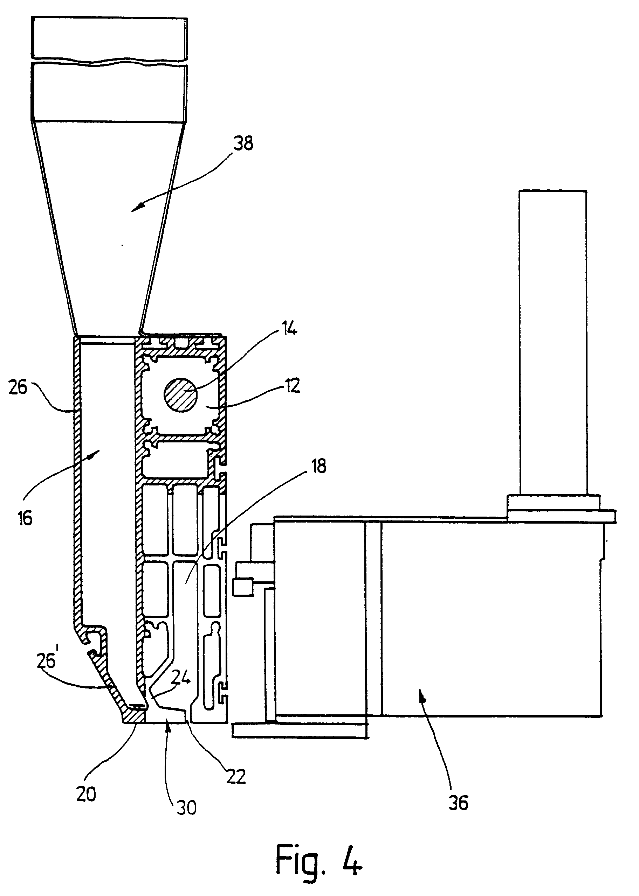

Die Verbindung von Absaugkanal 16 und Schnittspalt 22 im Übergangsbereich der beiden Spaltabschnitte 18, 22 kann durch parallel zur unteren Druckbalkenseite 22 geführte Bohrungen 28 und/oder durch Spannzangenöffnungen 30 (Figur 4) gebildet sein. Diese und/oder die Bohrungen 28 werden von der Bedienungsseite des Druckbalkens in diesen eingebracht, wobei im letzteren Falle die gemäß Figur 2 rechts des Schnittspaltes 22 liegenden Bohrungsabschnitte durch jeweils einen Verschlußstopfen 32 wieder verschlossen werden. Die Bohrungen durchsetzen hierbei die Trennwand 24.

Wie Figur 4 zeigt, bietet die Schräganordnung der Trennwand 24 zur inneren Begrenzugswand 34 des Absaugkanals 16 den Vorteil, daß beim Ausfräsen der Spannzangenöffnungen 30 zugleich die Trennwand 24 durchfräst wird, so daß dabei zwangsläufig die Verbindung von Absaugkanal 16 und Schnittspalt 22 entsteht. In Figur 4 ist mit 36 als Ganzes eine pneumatisch betätigbare Spannzange angedeutet, wie sie als Teil einer Vorschubeinrichtung von Plattenaufteilanlagen eingesetzt werden.

An den Absaugkanal können ein oder mehrere Absaugstutzen 38 einer Absaugeinrichtung angeschlossen sein. Das Hohlprofil zur Bildung des Druckbalkens 10 ist stirnseitig mit Verschlußplatten 40, 42 zu verschließen, welche die Lager der Druckbalkenausgleichswelle 14 aufnehmen. 44 und 46 bezeichnen an sich bekannte Druckbalkenführungen. Die erfindungsgemäße Konstruktion stellt sicher, daß Sägestäube und Späne durch einen im unmittelbaren Eintrittsbereich des Schnittspaltes 22 in den Druckbalken von diesem abgesaugt werden. Der in den Druckbalken integrierte Absaugkanal 16 trägt in erheblichem Umfange zur Biege- und Verwindungssteifigkeit des aus Aluminium bestehenden Druckbalkens bei.

## Patentansprüche

1. Druckbalken (10) für Sägemaschinen, mit einem sich an der Balkenunterseite (20) in Längsrichtung erstreckenden Schnittspalt (22), der mit einem sich in Längsrichtung des hohlen Druckbalkens (10) erstreckenden und an einer Absaugeinrichtung angeschlossenen Absaugkanal (16) verbunden ist,
**dadurch gekennzeichnet, daß**
sich der Absaugkanal (16) innerhalb des Druckbalkens (10) parallel zum Schnittspalt (22) erstreckt und über dessen Länge mit diesem verbunden ist und daß der Schnittspalt (22) vom restlichen Balkenhohlraum bzw. von Hohlräumen getrennt ist.

2. Druckbalken nach Anspruch 1, dadurch gekennzeichnet, daß der Schnittspalt (22) im Balkeninneren einen erweiterten Spaltabschnitt (18) aufweist und daß der Absaugkanal (16) über mindestens eine diesen vom erweiterten Spaltabschnitt (18) trennende Trennwand (24) durchsetzende Verbindungsöffnung (28 bzw. 30) mit dem erweiterten Spaltabschnitt (18) verbunden ist.

3. Druckbalken nach Anspruch 2, dadurch gekennzeichnet, daß die Verbindungsöffnung (28 bzw. 30) im Übergangsbereich der Balkenspaltabschnitte des Schnittspalts (22) vorgesehen ist.

4. Druckbalken nach einem der vorhergehenden Ansprüche, dadurch gekennzeichnet, daß der Absaugkanal (16) schachtartig ausgebildet ist und seine größere Abmessung im wesentlichen der Höhe des Druckbalkens (10) entspricht.

5. Druckbalken nach Anspruch 4, dadurch gekennzeichnet, daß der schachtartige Absaugkanal (16) im Übergangsbereich zwischen beiden Abschnitten des Schnittspalts (22) mit letzterem verbunden ist.

6. Druckbalken nach einem der vorhergehenden Ansprüche, dadurch gekennzeichnet, daß der schachtartige Absaugkanal (16) seinem unteren Anschlußbereich zu düsenartig verengt ist.

7. Druckbalken nach Anspruch 5 oder 6, dadurch gekennzeichnet, daß der Druckbalken (10) durch ein diverse Hohlräume sowie den Absaugkanal (16) enthaltendes, einstückiges Aluminium-Ziehprofil gebildet ist und daß die Verbindungsöffnungen (28 bzw. 30) zwischen Absaugkanal (16) und Spaltabschnitt (18) durch von der Maschinenbedienungsseite aus in den Druckbalken (10) eingebrachte und an dieser Balkenseite wieder verschlossene Bohrungen (28) und/oder durch Balkenausfräsungen (30) für Plattenspannzangen (36) gebildet sind.
